(19) Europäisches Patentamt / European Patent Office / Office européen des brevets

(11) **EP 3 197 762 B1**

(12) **EUROPEAN PATENT SPECIFICATION**

(45) Date of publication and mention
of the grant of the patent:
**19.12.2018 Bulletin 2018/51**

(21) Application number: **15749819.7**

(22) Date of filing: **13.08.2015**

(51) Int Cl.:
**B62D 49/08** *(2006.01)*     **A01B 76/00** *(2006.01)*
**B62D 49/06** *(2006.01)*

(86) International application number:
**PCT/EP2015/068659**

(87) International publication number:
**WO 2016/045868 (31.03.2016 Gazette 2016/13)**

(54) **DETERMINING OPTIMAL BALLASTING**

BESTIMMUNG EINER OPTIMALEN BALLASTBELADUNG

DÉTERMINATION DE LESTAGE OPTIMAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2014 GB 201416990**

(43) Date of publication of application:
**02.08.2017 Bulletin 2017/31**

(73) Proprietor: **AGCO International GmbH
8212 Neuhausen am Rheinfall (CH)**

(72) Inventors:
• **BUCHNER, Thiemo
87616 Marktoberdorf (DE)**
• **PICHLMAIER, Benno
87616 Marktoberdorf (DE)**

(74) Representative: **AGCO Intellectual Property
Department
AGCO Limited
Abbey Park Stoneleigh
Kenilworth, Warwickshire CV8 2TQ (GB)**

(56) References cited:
**WO-A1-2013/013915     WO-A1-2013/013917**

• **PRANAV P K ET AL: "Computer simulation of
ballast management for agricultural tractors",
JOURNAL OF TERRAMECHANICS, ELSEVIER,
AMSTERDAM, NL, vol. 45, no. 6, 1 December 2008
(2008-12-01), pages 185-192, XP025967304, ISSN:
0022-4898, DOI: 10.1016/J.JTERRA.2008.12.002
[retrieved on 2009-01-29]**

**Description**

The invention is related to tractors and other agricultural vehicles on which may be mounted various combinations of ballasting weights, and in particular to methods for optimising selection from among the various combinations. The invention also relates to a programmable device configured to perform the method in response to input from a user and to a software utility for programming such a device.

It is known to attach ballast in the form of one or more additional weights to the front, rear or the wheels of an agricultural vehicle to counteract external forces mainly applied by implements attached. With agricultural tractors, most heavy implements are attached to the rear, and ballasting weights on wheels and at the front of the vehicle are very common. Rear mounted ballasting weights are used for front-loader operation.

The choice of the right ballast is very complex, as described for example in commonly-assigned International patent application WO2013/013915, due to the fact that several influencing parameters must be considered. If these parameters are known, it is a matter of mechanics to determine the ballast configuration. However, this requires extensive knowledge on the part of the operator which is not present in many cases, especially if untrained persons are concerned. Even a system just automatically requesting the parameters would overload the operator as much parameter data will not be available to them or depends on the operation in the field. Providing a system which receives the parameters without the operators input would require various sensors to determine the parameters and thereby be quite costly.

As an alternative approach, some standalone (offline) ballasting assistance systems calculate ballast weight by assuming average values for these parameters, but this results in vague ballasting recommendations. An example of such an offline ballasting assistance system is the Deere 9030 series spreadsheet currently downloadable from http://www.deere.com/en_US/docs/agriculture/learn_more/tractors_ballast_calculator/9030_s eries_wheel_tractors_ballast_calc.xls

It is an object of the present invention to provide a method for optimising ballast weight selection and a ballasting assistance system for implementing the same which avoids at least some of the above-mentioned disadvantages.

In accordance with the present invention there is provided a method for selecting and indicating to a user one from a plurality of ballasting options for an agricultural vehicle when coupled to an agricultural implement, comprising:

within a first range of discrete values of a first operational parameter of the vehicle and a first range of discrete values of a second operational parameter of the vehicle, using a received identifier for a selected implement to look up a second range, less than or equal to the first range, of discrete values of the first parameter, and a second range, less than or equal to the first range, of discrete values of the second parameter to obtain a values subset from the combinations of discrete first and second operational parameter values;
deriving an optimal selection from the plurality of ballasting options for each combination in the values subset;
identifying one ballasting option selection on the basis of a predetermined selection criteria; and
indicating the identified selection to the user.

By considering ranges of two or more operational parameters, tolerance for those factors such as hardness of ground (which will not generally be known at set up) may be incorporated in the decision as to which of the ballasting options available to a user would be optimal, that is to say most likely to be suited in a variety of conditions. The operational parameters of the vehicle may include direct values such as a working speed and/or an engine loading, as well as indirect or resultant values such as a vertical load due to an implement on a connection between the said implement and the vehicle: whether due to an implement or the vehicle alone, these values will be referred to herein as vehicle operational parameters.

Also in accordance with the present invention there is provided a ballasting assistance system for an agricultural vehicle when coupled with an agricultural implement, the system comprising:

a display device;
a data storage device; and
a data processing device in communication with the display device and the data storage device, the data processing device configured to select one from a plurality of stored ballasting options for the agricultural vehicle when coupled to a selected agricultural implement, by performing the steps of:

within a first range of discrete values of a first operational parameter of the vehicle and a first range of discrete values of a second operational parameter of the vehicle, using a received identifier for the selected implement to look up in the data storage device a second range, less than or equal to the first range, of discrete values of the first parameter, and a second range, less than or equal to the first range, of discrete values of the second parameter to obtain a values subset from the combinations of discrete first and second operational parameter values;

deriving a respective optimal selection from the plurality of ballasting options for each combination in the values subset;
identifying one ballasting option selection on the basis of a predetermined selection criteria; and
displaying the identified one ballasting option selection on the display device.

The display device may be a touch screen device and the received identifier may be obtained from a look-up table in the data storage device in response to user selection via the touch screen from a menu of implement types displayed. Alternately, the system may further comprise wireless communication means, with the received identifier being obtained from a remotely stored look-up table in response to user selection via the data processing device.

In a further aspect of the present invention there is provided a data storage device carrying data defining a software utility, said software utility when loaded to a data processing device in communication with a display device providing a ballasting assistance system for an agricultural vehicle coupled with an agricultural implement in which ballasting assistance system the data processing device is configured to select one from a plurality of stored ballasting options for the agricultural vehicle when coupled to the agricultural implement, by performing the steps of:

within a first range of discrete values of a first operational parameter of the vehicle and a first range of discrete values of a second operational parameter of the vehicle, using a received identifier for the selected implement to look up in the data storage device a second range, less than or equal to the first range, of discrete values of the first parameter, and a second range, less than or equal to the first range, of discrete values of the second parameter to obtain a values subset from the combinations of discrete first and second operational parameter values;
deriving a respective optimal selection from the plurality of ballasting options for each combination in the values subset;
identifying one ballasting option selection on the basis of a predetermined selection criteria; and
displaying the identified one ballasting option selection on the display device.

Further features and advantages are recited in the dependent sub-claims to which reference is now made.

Embodiments of the present invention will now be described, by way of example only, with reference to the accompanying drawings in which:

Figure 1 schematically represents the components of a first embodiment of ballasting assistance system and user interface;
Figure 2 is a schematic representation of a tractor carrying ballasting weights;
Figure 3 is a flow chart of a method for selecting one from a plurality of available ballasting options;
Figure 4 is an example table of ballasting options from combinations of available ballasting weights;
Figure 5 is a graphical representation of a first set of optimal ballast option results for differing combinations of vehicle operating parameter;
Figure 6 is a graphical representation of a further set of optimal ballast option results for differing combinations of vehicle operating parameter (values subset) with selection of an implement;
Figure 7 is a tabular representation of the results from Figure 6;
Figure 8 is a modified version of the graphical representation of Figure 6 with weighted selection criteria;
Figure 9 is a tabular representation of the results from Figure 8;
Figure 10 represents a user interface for a further embodiment of ballasting assistance system;
Figure 11 is a tabular representation of the results for a further example ballasting assistance calculation; and
Figure 12 is a graphical representation of the results from Figure 11.

A ballasting method embodying the present invention can be used in several systems, including:

▪ OFFLINE-Ballasting assistance system (just application software and an associated interface running on a programmable device or on a vehicle such as a tractor without any measurements/input from machinery).
▪ OFFLINE-Ballasting assistance system in combination with a tyre pressure control system to adapt tyre pressure on the machinery including parameter input (e.g. by wheel load sensors).
▪ ONLINE Ballasting assistance on a tractor including tyre pressure control.

The system is described initially on the basis of an OFFLINE ballasting assistance.

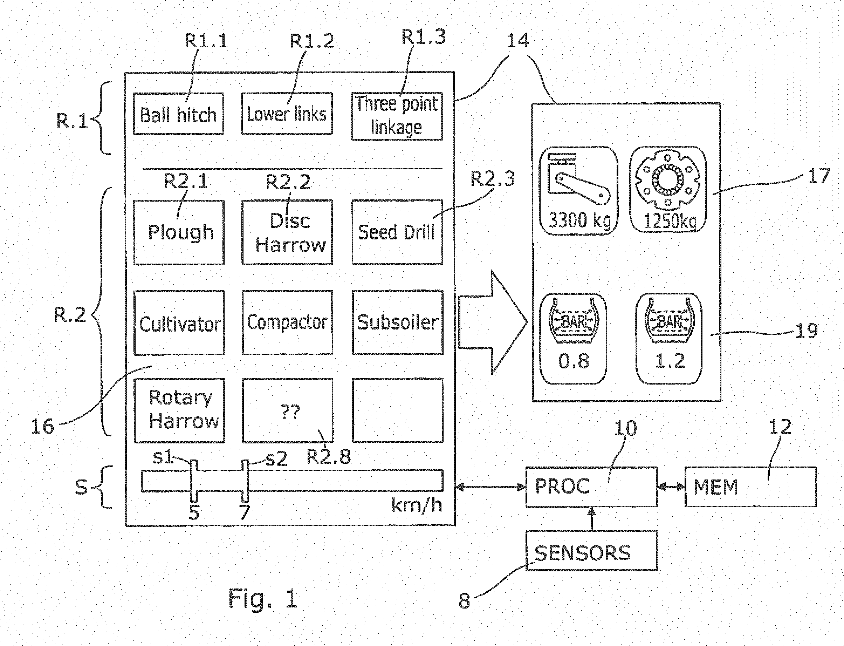

Figure 1 schematically represents the components of a programmable device suitable to implement the method of ballasting suggestion determination for a given combination of tractor and implement. A processor 10 is coupled with a memory 12 holding processor code and ancillary vehicle data which will be described in further detail below. A human-machine interface (HMI) 14 coupled with the processor 10 may suitably comprise a touch-screen device, although a simple display screen and separate user control means such as a keyboard, joystick or mouse may also be used. The programmable device may be a separate standalone device (for OFFLINE operation) such as a laptop or tablet computer or smartphone, or it may be integrated with the control electronics and display of the tractor or other agricultural vehicle to which the ballasting suggestion will relate. Where the device is a standalone device, it may nonetheless have means to establish wireless communication with remote locations (for example via the internet) where vehicle data is stored.

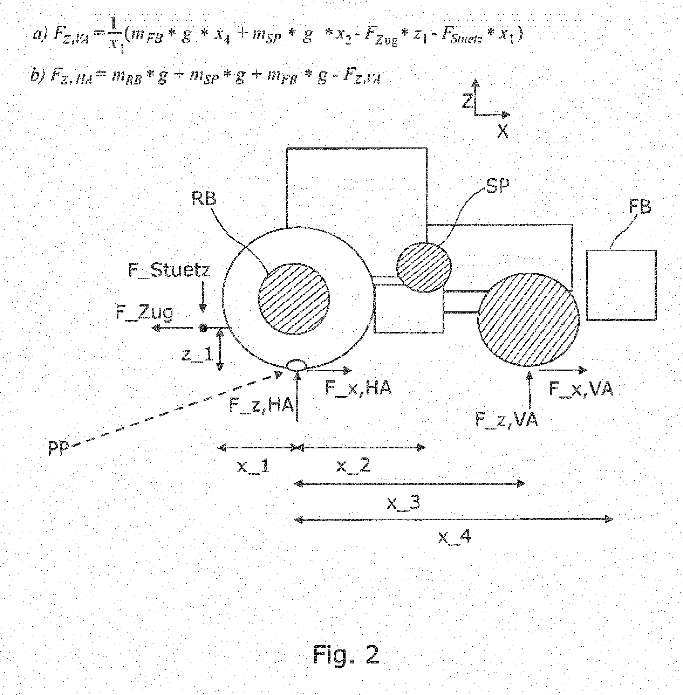

The figure shows a main menu 16 displayed on the HMI 14 with a first row R.1 of input buttons (or touch sensitive areas) allow the operator to define how the implement is attached to the tractor, with R1.1 indicating a trailed implement, R1.2 indicating semi-mounted, and R1.3 fully mounted. The mode of attachment influences the mechanical balancing about a pivot point (PP; Fig.2) and the respective equations used for determination of optimal ballasting selection, as explained later.

A second set of interface input buttons R.2 allows the operator to input the type of attached implement, such as a plough (button R2.1), disc harrow (R2.2) or seed drill (R2.3). In contrast to other ballasting assistance systems, the choice of a generic implement type does not set predetermined values to be considered during calculation but instead delivers from memory 12 a range for some of the parameters. This arrangement is simple to understand and use for an unskilled operator. One or more buttons R2.8 may be assigned to specific implements of a user for which the optimal ballasting selection has previously been made and stored. A further optional input area S provides a pair of sliders s1, s2 enabling a more skilled user to input an operating speed range as minimum and maximum values (5-7km/h in the example) which input values may be set to override any stored values for the speed range in subsequent calculations. Where the stored value takes precedence over user input, the area S may simply be used to provide a visual indicator of a stored speed range to the user.

As an example the vehicle operating parameter values stored for "Plough" (button R2.1) may be:

- vertical load (shown as F_Stuetz in Figure 2): 0 - 3 tonnes
- working speed : 8 - 12 km/h
- Engine load : >90%

Further parameters beyond load and speed may be stored. For example, since a seed drill is not only dragged over ground but also has hydraulic drives driven during field operation, a Power Split value is also stored, containing the ratio between power used to drag the implement and used to drive hydraulic or pneumatic drives.

As an example the values stored for "Seed Drill" (button R2.3) may be:

- vertical load : 1 - 6 tonnes
- working speed : 12 - 16 km/h
- Engine load : >90%
- Power split (hydraulic/drag) : 40/60

In this arrangement, some of the values for each implement are stored as ranges in order to recognise the fact that for example the vertical load depends on factors including the working depth and ground condition (soft soil, hard soil etc.), both of which will be unknown when using the present ballasting assistance system.

The system also considers parameters which are predetermined by the vehicle manufacturer, namely the geometric relations which influence the force balance are defined by vehicle data, including wheel separation, centre of gravity, and vehicle weight. Figure 2 schematically represents a number of these parameters, including:

| | |
|---|---|
| RB | Rear axle-mounted ballast |
| SP | Centre of gravity (mass and position) for unloaded vehicle |
| FB | Front ballast |
| $x\_1$ | horizontal separation of hitch point and pivot point PP |
| $x\_2$ | horizontal separation of pivot point PP and SP |
| $x\_3$ | horizontal separation of pivot point PP and centre of front axle |
| $x\_4$ | horizontal separation of pivot point PP and FB mounting |
| $z\_1$ | vertical separation of hitch point and pivot point PP |
| F_Zug | drag force |
| F_Steutz | vertical load on hitch point |
| F_z, HA | wheel load on rear axle(s) |
| F_z, VA | wheel load on front axle(s) |

Furthermore details of the power flow or other parameters are predetermined depending on vehicle configuration, such as:

- Nominal engine performance (say 500hp/373kW),
- Overall efficiency between motor and wheel (for calculating F_U, F_Zug)
- Optimal distribution of wheel load (ceta_opt): ceta = F_z, VA / F_z, HA
- Assumed average slippage of the wheel on ground

In addition to this detail about the physical parameters of the unloaded vehicle, the stored data on which the derivation is based also includes available ballast variants. In a new machine scenario, the range of ballast variants may be taken from the manufacturer's price list. Once delivered, the system may be configured to give an operator the choice to add or reduce the list depending on the weight availability (for example to restrict the choice only to those ballast weights that the operator owns or may borrow from neighbours).

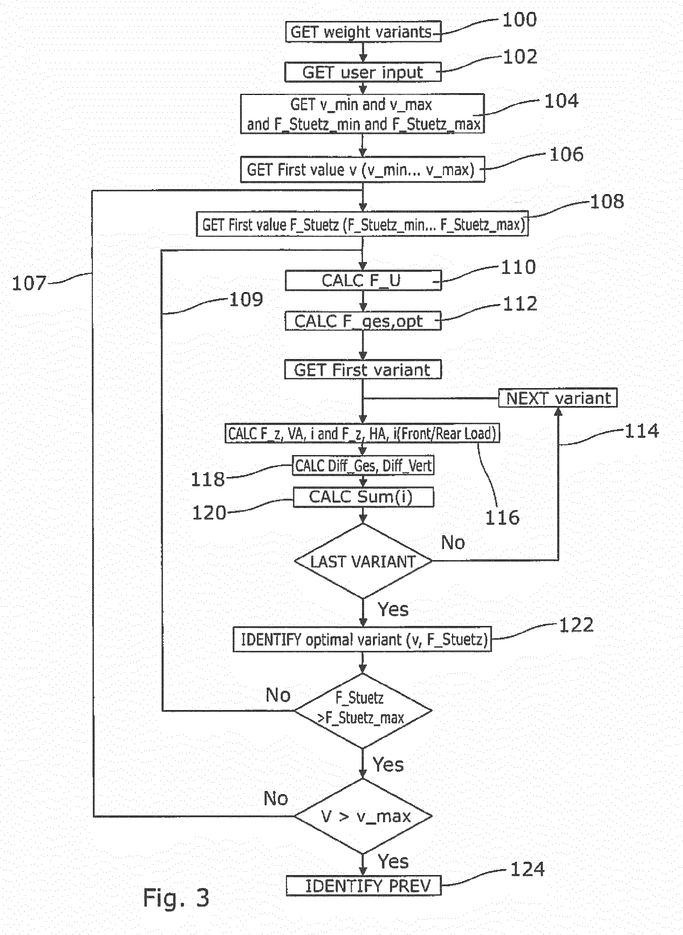

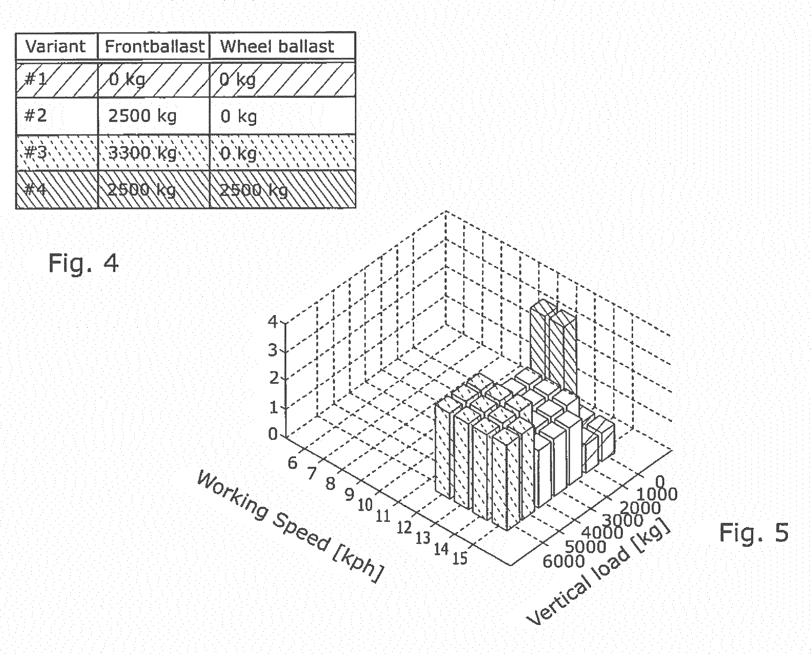

The general method for optimal ballast determination by the on-board or ancillary system of the tractor or other agricultural vehicle, is represented by the flow chart of Figure 3. Based on the available front and axle weights, at step 100 the system determines a range of ballast combination variants (combinations of front/wheel and/or rear ballasting weight options), an example of which is given in the table of Figure 4, ranging from zero ballasting on front end and wheels (variant #1) to maximum available 2500kg on each of front end and wheels (variant #4). In the following example, front and wheel ballasting options only are considered, but this is not limiting.

Returning to Figure 3, at step 102, the drivers input regarding the implement and the attachment condition is obtained via menu 16 (Fig. 1) enabling the processor 10 to determine in step 104 the range of values for working speed (v_min..v_max), vertical load (F_Stuetz_min ... F_Stuetz_max) and the discrete values for engine load and Power split (hydraulic/drag, if applicable for the type of implement) from storage in memory 12.

Taking the above example values stored for "Seed Drill" (button R2.3) into the example, at step 106 a first value v within the range of working speeds is taken (e.g. 12 km/h). Next is the start of a loop 107 which is repeated across the range of discrete values of working speed v, for example increments of 1km/h. The first operation in loop 107, at step 108, is to take a first value within the range of discrete values of vertical loads F_Stuetz (e.g. 1 tonne). The following loop 109 is repeated across the range of vertical loads F_Stuetz_min ... F_Stuetz_max before the next value of speed v is selected prior to the next iteration of loop 109. As will be recognised, the number of loops 107, 109 processed thereby depends on the chosen increment between the discrete values within the ranges of these operational parameters.

At the start of loop 109, at step 110, the sum of the circumferential forces of the wheels (at point PP) F_U is obtained. In an offline mode, this may be derived from engine performance data, engine load (optionally input by an skilled user), and efficiency factor assumptions (assumed from vehicle configuration and working speed or received as skilled user directly input data). In an online mode, F_U may be obtained from sensor monitoring of gearbox fluid pressure and rotation speed.

At step 112, the optimal total wheel load F_Ges,opt is calculated by the formula

$$F\_Ges,opt = F\_U/mue\_opt$$

where mue_opt is a factor determined by environmental conditions of the ground being worked and typically ranges from 0.51 (hard) to 0.55 (easy), with 0.53 being a typical intermediate value. Additional user input may include a qualitative estimation of the environmental conditions (weather, terrain, soil), such as "easy", "normal", "difficult": with this information the value of mue_opt can be adjusted.

In the loop indicated generally at 114, for each of the available ballast variants identified in step 100, the first step 116 is calculation of the respective front (F_z, VA) and rear (F_z, HA) wheel axle loads depending on the ballast variant, and based on the operator-identified type of device and implement connection type (which in turn enables look-up of hitch loading F_Stuetz). The additionally required drawbar pull is derived from F_U by assuming an average slippage and rolling resistance.

Next in the loop, at step 118 and taking the axle loadings from step 116, calculation of the differential current to the optimum value is performed according to:

$$Diff\_Ges = (F\_z, HA + F\_z, VA) - F\_Ges, opt$$

and differential current of the optimum distribution of the wheel load (Diff Vert), according to:

$$Diff\_Vert = (F\_z, VA/F\_z, HA) - ceta\_opt$$

where the optimal distribution of wheel load (ceta_opt) is a predetermined parameter. For conventional tractors with a smaller front and larger rear wheel, ceta_opt = 0,667 is a common assumption, which is a distribution of 60% load on the rear axle and 40% on the front axle.

At step 120 the differential currents from step 118 in loop 114 are assessed, with the sum for each ballast variant i being:

$$sum(i) = w\_mue * \left| Diff\_Ges \right| + w\_ceta * Diff\_Vert$$

with w_mue and w_ceta being free selectable weighting factors.

Steps 114 -120 are repeated until the each/last ballast variant has been processed providing sum(i) for each ballast variant. In step 122, the optimal ballast variant (jth variant) is determined as being the one whose sum (i) is the smallest compared with all the other ballast variants (wherein the ideal case is zero).

Steps 114 - 120 are repeated to give an array of optimum ballast selections (from currently available ballast options) based on two or more factors selected from hitch loading weight (vertical load F_Stuetz), working speed v, engine load and hitch type/geometry.

After repeating loops 107 and 109 (with steps 106 and 108) an optimal ballast variant is determined for each value of working speed and vertical load as shown in Figure 5 illustrating a 3D table of optimum ballast option selections across the range of working speed / vertical load and applied weight options for the chosen implement options.

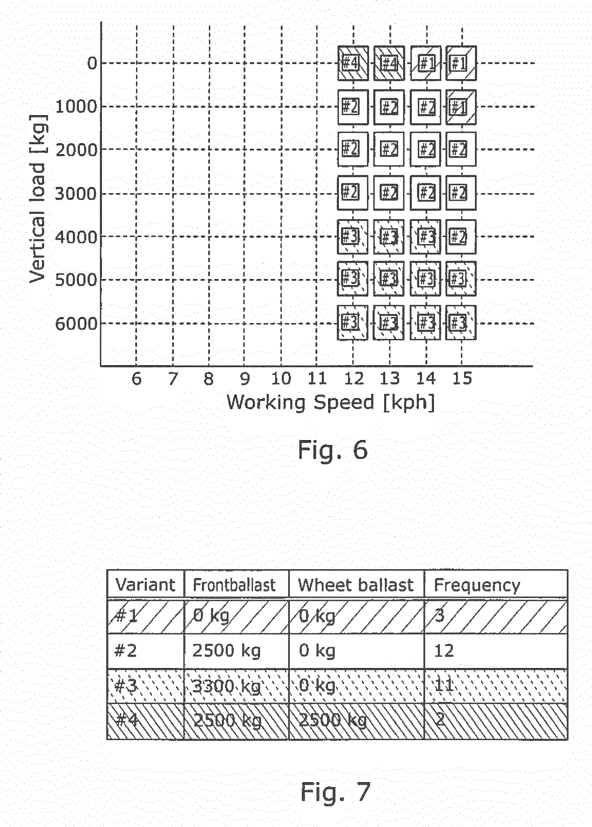

The 3D table of Figure 5 enables identifying of the final optimum ballasting variant at step 124 in Figure 3 with a preference for selection being based on prevalence: in other words, the system determines the ballast variant which was chosen the most within the range of operation for the selected implement. As best seen in Figure 6 and 7 for the seed drill parameters given above, the system would recommend ballast variant #2 as it was considered 12 times. Referring back to Figure 1, a ballasting recommendation indicated at 17 is displayed to the user via HMI 14, and may optionally be stored with a reference to the selected implement for subsequent recall by assignable button R2.8.

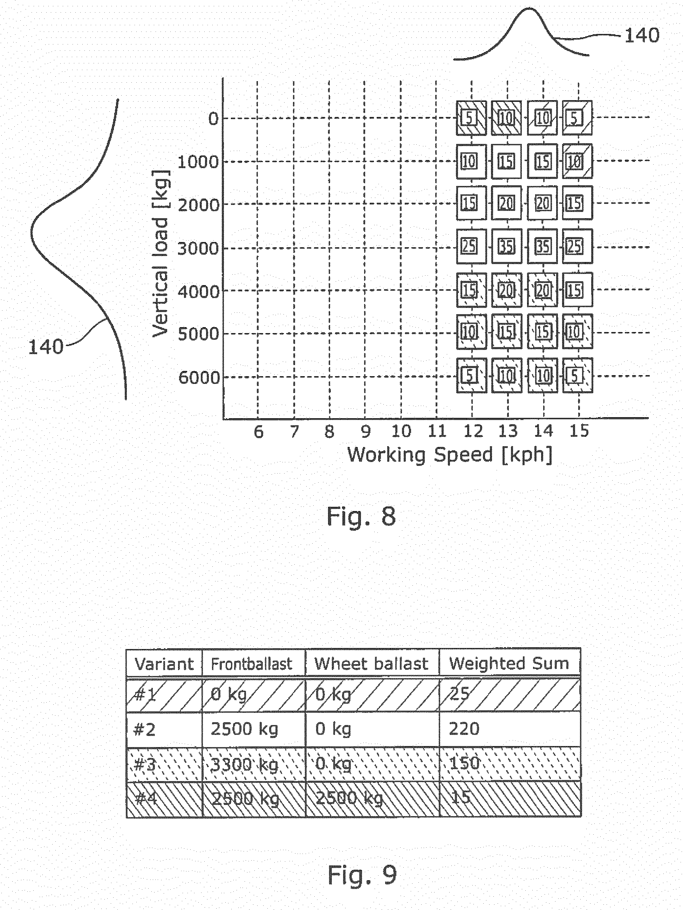

An alternative method to determine the ballast recommendation is shown in Figures 8 and 9. Instead of using simple prevalence the alternative method chooses the final optimum ballasting variant at step 124 in Figure 3 with a preference for selection being based on probability of occurrence. In other words, the system considers the fact that ballast variants at the edges of the ranges of working speed and vertical load may be less adequate than the ones distant to the edges. In this arrangement, ballast recommendations resulting from minimum or maximum values for working speed and vertical load are deducted. Mathematically the method of bivariate normal distribution or bivariate Gaussian distribution (http://en.wikipedia.org/wiki/Multivariate_normal_distribution) is used and explained in Figure 8.

Based on Gaussian distribution (as schematically shown with graphs 140), each of the ballasting variants determined at step 124 is given a probability of occurrence. The ballast variant with the highest overall sum is then selected. In Figures 8 and 9, the system would recommend ballast variant #2 as the overall sum for probability of occurrence was 220.

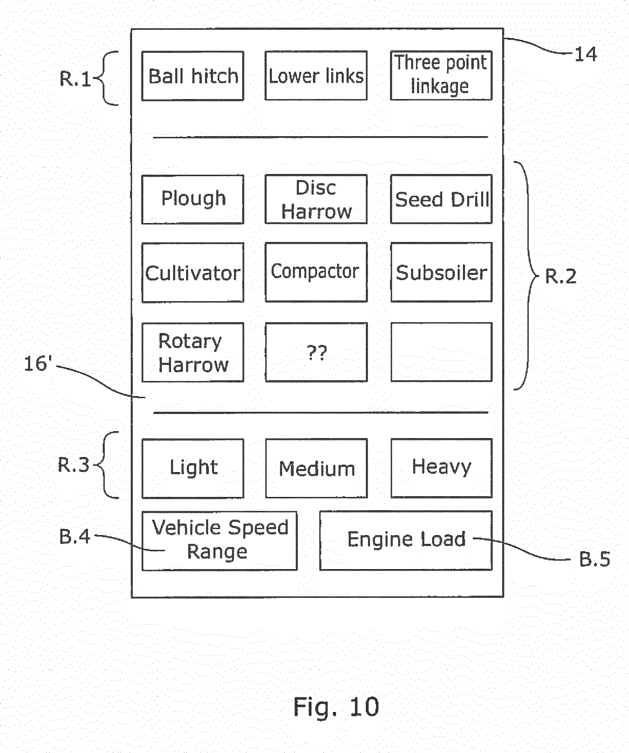

Figure 10 shows an alternative menu 16' displayed on HMI 14 similar to that of Figure 1 but with extra inputs to provide an Expert Mode for a skilled operator. With the additional row R.3 such an operator can input an operating condition (soil humidity etc.) so that mue_opt is adapted. Buttons B.4 and B.5 can be used to limit the range or enter an exact value for working speed range (B.4 - as alternative to the slider space S of Fig.1) and engine load (B.5). This input preferably overrides predetermined settings stored for implement (accessed by the buttons of rows R.2).

As mentioned above, the invention may additionally be embodied in an ONLINE ballasting/tyre pressure assistance system. Such a system is additionally provided with means in the form of sensors (8; Fig. 1) coupled with the processor 10 to determine parameters:

- F_U can be calculated based on CVT parameters such as gearbox fluid pressure and rotation speed (as described in the above-referenced WO2013/013915);
- F_z (wheel load for front and rear axle) can be determined by pressure sensors in the front axle and axle load sensors on the rear (as described in commonly-assigned International patent application WO2013/104981).

In the ONLINE Mode the operator enters the current ballasts attached. The system can determine the difference to ideal ballast accordingly. The operator can then be informed about:

1. Optimum tyre pressure for the current ballast
2. Optimum ballast
3. Optimum tyre pressure in combination with the optimum ballast (e.g. at 19, Fig.1).

A third embodiment of assistance system comprises the OFFLINE ballasting assistance in combination with an ONLINE tyre pressure assistance. In this case the rear wheel is not equipped with a wheel load sensor so that the OFFLINE ballasting assistance method is used to generate ballasting suggestions while alternative means such as an ultrasonic sensor is used at the rear to detect tyre pressure (by measuring distance between wheel rim bead and contact surface).

Although the above examples are given in terms of ballasting of a tractor front end and rear wheels, it will be readily understood that it may equally be applied to other weight distribution arrangements, for example with weighting on the rear linkage to counteract a front-linkage coupled implement. Other variations are possible and, as will be recognised, the method may be extended to incorporate a first range of a third operational parameter of the vehicle (for example engine load) and a second range, less than or equal to the first range, of discrete values of the third parameter to identify a three dimensional subset of derived ballasting option selections. As above, selection based on prevalence or probability within the subset is used to identify the recommended ballasting option.

In another variation, a full set of optimal ballast selections may be made across the range of vehicle operating (speed/weight) parameters. Having identified a fully populated version of the 3D table of Figure 5, the identity of the attached implement is then used to identify a second range, less than or equal to the first range, of discrete values of the first parameter (e.g. operating speed), and a second range, less than or equal to the first range, of discrete values of the second parameter (e.g. torque loading on the implement attachment of the vehicle such as a front or rear hitch) to identify a subset of the derived ballasting option selections. This subset or range of values enables identifying of a number of optimum ballasting option selections with a preference for selection being based on prevalence or probability within the subset, as above. Referring back to Figure 1, the ballasting recommendation (by whichever method attained) is suitably displayed to the user at 17 via HMI 14, and may optionally be stored with a reference to the selected implement.

In a further variation, selection from the derived ballasting option selections may be made by a user following presentation of a graphic representation of the options. For example, when presented with a display equivalent to Figure 6, especially if the different options were differently colour coded, a user would easily recognise that option #2 is most suited in terms of both prevalence and distribution across the subset. Alternatively, the user may have a better understanding of the operational parameters (e.g. which working speed is best) and may be enabled to choose just from the ballasts assigned to the respective working speed.

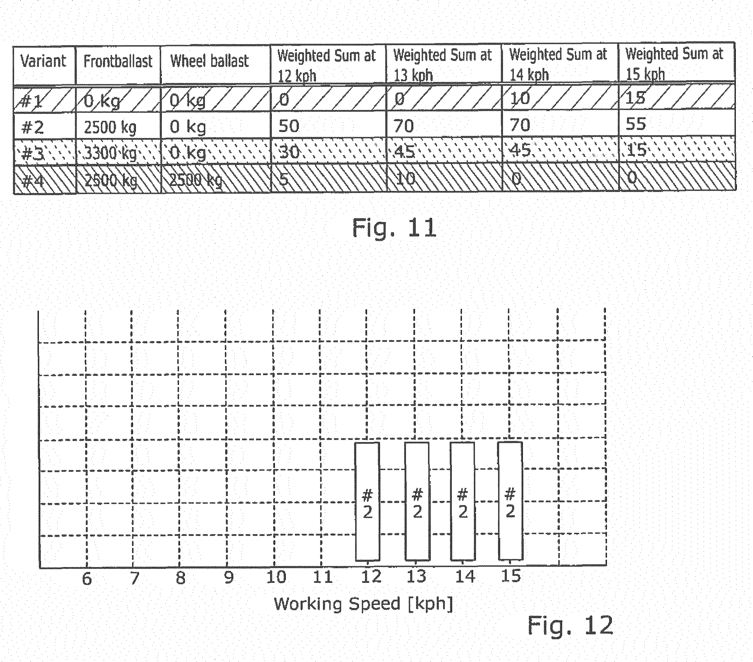

For assisting selection by the user, the graphic representations shown in Figures 5, 6 or 8 may be simplified. Knowing that it may be much easier for a user to select a ballast by considering the working speed rather than the vertical load (as working speed is a parameter which can be easily experienced), the system may eliminate one parameter. With reference to the method described in connection with Figure 8, using probability of occurrence the system may apply the method only to determine an optimal ballasting selection at each of a number of working speeds instead of applying the method to the complete speed range. Referring to Figures 11 and 12, and similar to Figure 8, each of the ballasting variants is given a probability of occurrence. The ballast variant with the highest overall sum for a single working speed is determined, as in the table shown in Figure 11, and then shown in a graph, as at Figure 12. The driver can then decide which working speed he prefers and chose the respective ballast variant.

In a still further variation, the driver may be presented with a menu enabling selection of a ballast variant, with the system then presenting further ballast variants, determined as above, for a predetermined range of values of e.g. working speed and/or vertical load. As an example, where the driver has selected a certain ballast configuration, the system will determine alternative ballast configurations and then present to the driver a graphic indicating the range of working speeds for which the selected ballasting is acceptable, too low, or too high.

In the foregoing we have described a method and system for selecting and indicating to a user one from a plurality of available ballasting options for an agricultural vehicle when coupled to an agricultural implement. The implement type defines operating ranges of discrete values for first, second and optionally third operational parameters of the vehicle, with the differing combinations defining a values subset. An optimal choice from the available ballasting options is made for each combination in the values subset, and a selection from the optimal choices based on prevalence or probability of occurrence is made and presented to the user. Operational parameters may include operating speed, loading due to implement weight and engine power.

**Claims**

1. A method for selecting and indicating to a user one from a plurality of ballasting options for an agricultural vehicle when coupled to an agricultural implement, comprising:

within a first range of discrete values of a first operational parameter of the vehicle and a first range of discrete values of a second operational parameter of the vehicle, using a received identifier (R2.1) for a selected implement to look up a second range, less than or equal to the first range, of discrete values of the first parameter, and a second range, less than or equal to the first range, of discrete values of the second parameter to obtain a values subset from the combinations of discrete first and second operational parameter values;

deriving (107, 109) a respective optimal selection from the plurality of ballasting options for each combination in the values subset;

identifying (124) one ballasting option selection on the basis of a predetermined selection criteria; and indicating the identified selection to the user.

2. A method as claimed in claim 1, wherein the predetermined selection criteria is prevalence of a particular one of the plurality of ballasting options within the values subset.

3. A method as claimed in claim 1, wherein the predetermined selection criteria is probability of occurrence of a particular one of the plurality of ballasting options within the values subset.

4. A method as claimed in claim 1, wherein the predetermined selection criteria is a user selection in response to a presented visual representation (Fig. 5) of the values subset.

5. A method as claimed in any of claims 1 to 4, wherein the first operational parameter of the vehicle is a working speed.

6. A method as claimed in any preceding claim, wherein the second operational parameter of the vehicle is a vertical load (F_Steutz) due to an implement on a connection between the said implement and the vehicle.

7. A method as claimed in any preceding claim, wherein the received identifier (R2.1) is obtained from a look-up table in response to user selection from a menu (R2, 16) of implement types.

8. A method as claimed in any preceding claim, wherein each respective optimal selection from the plurality of ballasting options for each combination in the values subset is determined by

• calculating of wheel load distribution (ceta) and total weight (mue) for each ballast option for each combination in the values subset;
• determining the differential current of wheel load distribution (ceta) and total weight (mue) compared to a predetermined optimum value for each ballast option for each combination in the values subset;
• choosing as the respective optimal selection the ballast variant with the smallest sum of both differential currents

9. A method as claimed in any preceding claim, further comprising identifying a first range of discrete values of a third operational parameter of the vehicle to extend the values subset to combinations of discrete first, second and third operational parameter values prior to the step of deriving an optimal selection.

10. A method as claimed in claim 9, wherein the third operational parameter of the vehicle is an engine loading.

11. A method as claimed in any preceding claim, further comprising storing an identified one ballasting option selection by reference to an identifier (R2.8) for the coupled agricultural implement.

12. A ballasting assistance system for an agricultural vehicle when coupled with an agricultural implement, the system comprising:

a display device (14);
a data storage device (12); and

a data processing device (10) in communication with the display device and the data storage device, the data processing device configured to select one from a plurality of stored ballasting options for the agricultural vehicle when coupled to a selected agricultural implement, by performing the steps of:

within a first range of discrete values of a first operational parameter of the vehicle and a first range of discrete values of a second operational parameter of the vehicle, using a received identifier (R2.1) for the selected implement to look up in the data storage device (12) a second range, less than or equal to the first range, of discrete values of the first parameter, and a second range, less than or equal to the first range, of discrete values of the second parameter to obtain a values subset from the combinations of discrete first and second operational parameter values;

deriving (107, 109) a respective optimal selection from the plurality of ballasting options for each combination in the values subset;
identifying (124) one ballasting option selection on the basis of a predetermined selection criteria; and
displaying the identified one ballasting option selection on the display device.

13. A ballasting assistance system as claimed in claim 12, wherein the display device (14) is a touch screen device and the received identifier is obtained from a look-up table in the data storage device (12) in response to user selection via the touch screen from a menu (R2, 16) of implement types displayed.

14. A ballasting assistance system as claimed in claim 12, further comprising wireless communication means, and the received identifier is obtained from a remotely stored look-up table in response to user selection via the data processing device (10).

15. A data storage device (12) carrying data defining a software utility, said software utility when loaded to a data processing device (10) in communication with a display device providing a ballasting assistance system for an agricultural vehicle coupled with an agricultural implement in which ballasting assistance system the data processing device is configured to select one from a plurality of stored ballasting options for the agricultural vehicle when coupled to the agricultural implement, by performing the steps of:

within a first range of discrete values of a first operational parameter of the vehicle and a first range of discrete values of a second operational parameter of the vehicle, using a received identifier (R2.1) for the selected implement to look up in the data storage device a second range, less than or equal to the first range, of discrete values of the first parameter, and a second range, less than or equal to the first range, of discrete values of the second parameter to obtain a values subset from the combinations of discrete first and second operational parameter values;
deriving (107, 109) a respective optimal selection from the plurality of ballasting options for each combination in the values subset;
identifying (124) one ballasting option selection on the basis of a predetermined selection criteria; and
displaying the identified one ballasting option selection on the display device.

**Patentansprüche**

1. Verfahren zum Auswählen einer aus einer Mehrzahl von Ballastierungsoptionen für ein landwirtschaftliches Fahrzeug, wenn das landwirtschaftliche Fahrzeug an ein Anbaugerät gekoppelt ist, und Anzeigen dieser an einen Benutzer, mit:

innerhalb eines ersten Bereichs von diskreten Werten eines ersten Betriebsparameters des Fahrzeugs und eines ersten Bereichs von diskreten Werten eines zweiten Betriebsparameters des Fahrzeugs, Verwenden eines empfangenen Identifikators (R2.1) für ein ausgewähltes Anbaugerät, um einen zweiten Bereich, kleiner als oder gleich dem ersten Bereich, von diskreten Werten des ersten Parameters und einen zweiten Bereich, kleiner als oder gleich dem ersten Bereich, von diskreten Werten des zweiten Parameters nachzuschlagen, um eine Werte-Untergruppe aus den Kombinationen von diskreten ersten und zweiten Betriebsparameterwerten zu erhalten;
Ableiten (107, 109) einer jeweiligen optimalen Auswahl aus der Mehrzahl von Ballastierungsoptionen für jede Kombination innerhalb der Werte-Untergruppe;
Identifizieren (124) einer Ballastierungsoptions-Auswahl auf der Basis eines vorherbestimmten Auswahlkriteriums; und
Anzeigen der identifizierten Auswahl an den Benutzer.

2. Verfahren nach Anspruch 1, wobei das vorherbestimmte Auswahlkriterium ein Vorherrschen einer bestimmten der Mehrzahl von Ballastierungsoptionen innerhalb der Werte-Untergruppe ist.

3. Verfahren nach Anspruch 1, wobei das vorherbestimmte Auswahlkriterium eine Wahrscheinlichkeit eines Vorkommens eine bestimmten der Mehrzahl von Ballastierungsoptionen innerhalb der Werte-Untergruppe ist.

4. Verfahren nach Anspruch 1, wobei das vorherbestimmte Auswahlkriterium eine Benutzerauswahl in Antwort auf eine angebotene visuelle Darstellung (Fig. 5) der Werte-Untergruppe ist.

**5.** Verfahren nach einem der Ansprüche 1 bis 4, wobei der erste Betriebsparameter des Fahrzeugs eine Arbeitsgeschwindigkeit ist.

**6.** Verfahren nach einem der vorhergehenden Ansprüche, wobei der zweite Betriebsparameter des Fahrzeugs eine Vertikallast (F_Steutz) an einer Verbindung zwischen dem Anbaugerät und dem Fahrzeug aufgrund eines Anbaugeräts ist.

**7.** Verfahren nach einem der vorhergehenden Ansprüche, wobei der empfangene Identifikator (R2.1) aus einer Nachschlagetabelle in Antwort auf eine Benutzerauswahl aus einem Menü (R2, 16) von Anbaugerät-Typen erhalten wird.

**8.** Verfahren nach einem der vorhergehenden Ansprüche, wobei jede optimale Auswahl aus der Mehrzahl von Ballastierungsoptionen für jede Kombination in der Werte-Untergruppe bestimmt wird durch:

• Berechnen einer Achslastverteilung (ceta) und eines Gesamtgewichts (mue) für jede Ballastoption für jede Kombination in der Werte-Untergruppe;
• Bestimmen des Differenzialstroms der Achslastverteilung (ceta) und des Gesamtgewichts (mue) verglichen mit einem vorherbestimmten optimalen Wert für jede Ballastoption für jede Kombination in der Werte-Untergruppe;
• Auswählen der Ballastvariante mit der kleinsten Summe der beiden Differenzialströme als die jeweilige optimale Auswahl.

**9.** Verfahren nach einem der vorhergehenden Ansprüche, weiterhin mit dem Identifizieren eines ersten Bereichs von diskreten Werten eines dritten Betriebsparameters des Fahrzeugs, um die Werte-Untergruppe vor dem Schritt des Ableitens einer optimalen Auswahl auf Kombinationen von diskreten ersten, zweiten und dritten Betriebsparameterwerten zu erweitern.

**10.** Verfahren nach Anspruch 9, wobei der dritte Betriebsparameter des Fahrzeugs eine Motorauslastung ist.

**11.** Verfahren nach einem der vorhergehenden Ansprüche, weiterhin mit einem Speichern einer identifizierten Ballastierungsoptions-Auswahl durch Verweisung auf einen Identifikator (R2.8) für das angekoppelte landwirtschaftliche Anbaugerät.

**12.** Ballastierungs-Assistenzsystem für ein landwirtschaftliches Fahrzeug, wenn es mit einem landwirtschaftlichen Anbaugerät gekoppelt ist, mit:

einer Anzeigeeinrichtung (14);
einer Datenspeichereinrichtung (12); und
einer Datenverarbeitungseinrichtung (10), die in Kommunikation mit der Anzeigeeinrichtung und der Datenspeichereinrichtung steht, wobei die Datenverarbeitungseinrichtung dazu eingerichtet ist, eine aus einer Mehrzahl von gespeicherten Ballastierungsoptionen für das landwirtschaftliche Fahrzeug auszuwählen, wenn es an ein ausgewähltes landwirtschaftliches Anbaugerät gekoppelt ist, durch Ausführen der folgenden Schritte:

innerhalb eines ersten Bereichs von diskreten Werten eines ersten Betriebsparameters des Fahrzeugs und eines ersten Bereich von diskreten Werten eines zweiten Betriebsparameters des Fahrzeugs, Verwenden eines empfangenen Identifikators (R2.1) für das ausgewählte Anbaugerät zum Nachschlagen eines zweiten Bereichs, kleiner als oder gleich dem ersten Bereich, von diskreten Werten des ersten Parameters und eines zweiten Bereichs, kleiner als oder gleich dem ersten Bereich, von diskreten Werten des zweiten Parameters in der Datenspeichereinrichtung (12), um eine Werte-Untergruppe aus den Kombinationen von diskreten ersten und zweiten Betriebsparameterwerten zu erhalten;
Ableiten (107, 109) einer optimalen Auswahl aus der Mehrzahl von Ballastierungsoptionen für jede Kombination in der Werte-Untergruppe;
Identifizieren (124) einer abgeleiteten Ballastierungsoptions-Auswahl auf der Basis eines vorherbestimmten Auswahlkriteriums; und
Anzeigen der identifizierten Ballastierungsoptions-Auswahl auf der Anzeigeeinrichtung.

**13.** Ballastierungs-Assistenzsystem nach Anspruch 12, wobei die Anzeigeeinrichtung eine Touchscreen-Einrichtung (14) ist und der empfangene Identifikator aus einer Nachschlagetabelle in der Datenspeichereinrichtung (12) in Antwort auf eine Auswahl durch den Benutzer über den Touchscreen aus einem angezeigten Menü (R2, 16) von Anbaugerät-Typen erhalten wird.

14. Ballastierungs-Assistenzsystem nach Anspruch 12, weiterhin mit einem drahtlosen Kommunikationsmittel, und wobei der empfangene Identifikator aus einer entfernt gespeicherten Nachschlagetabelle in Antwort auf eine Auswahl durch den Benutzer über die Datenverarbeitungseinrichtung (10) erhalten wird.

15. Datenspeichereinrichtung (12), die ein Dienstprogramm definierende Daten trägt, wobei das Dienstprogramm, wenn es auf eine Datenverarbeitungseinrichtung (10) geladen wird, die in Kommunikation mit einer Anzeigeeinrichtung steht, ein Ballastierungs-Assistenzsystem für ein mit einem landwirtschaftlichen Anbaugerät gekoppeltes landwirtschaftliches Fahrzeug bereitstellt, worin die Datenverarbeitungseinrichtung dazu eingerichtet ist, eine aus einer Mehrzahl von gespeicherten Ballastierungsoptionen für das landwirtschaftliche Fahrzeug, wenn es an das landwirtschaftliche Anbaugerät gekoppelt ist, auszuwählen, durch Ausführen der folgenden Schritte:

innerhalb eines ersten Bereich von diskreten Werten eines ersten Betriebsparameters des Fahrzeugs und einen ersten Bereichs von diskreten Werten eines zweiten Betriebsparameters des Fahrzeugs, Verwenden eines empfangenen Identifikators (R2.1) für das ausgewählte Anbaugerät, um einen zweiten Bereich, kleiner als oder gleich dem ersten Bereich, von diskreten Werten des ersten Parameters und einen zweiten Bereich, kleiner als oder gleich dem ersten Bereich, von diskreten Werten des zweiten Parameters nachzuschlagen, um eine Werte-Untergruppe aus den Kombinationen von diskreten ersten und zweiten Betriebsparameterwerten zu erhalten;
Ableiten (107, 109) einer jeweiligen optimalen Auswahl aus der Mehrzahl von Ballastierungsoptionen für jede Kombination innerhalb der Werte-Untergruppe;
Identifizieren (124) einer Ballastierungsoptions-Auswahl auf der Basis eines vorherbestimmten Auswahlkriteriums; und
Anzeigen der identifizierten Ballastierungsoptions-Auswahl auf der Anzeigeeinrichtung.

## Revendications

1. Procédé pour sélectionner et indiquer à un utilisateur l'une d'une pluralité d'options de lestage pour un véhicule agricole quand il est accouplé à un outil agricole, comprenant :

dans une première plage de valeurs distinctes d'un premier paramètre de fonctionnement du véhicule et une première plage de valeurs distinctes d'un deuxième paramètre de fonctionnement du véhicule, l'utilisation d'un identifiant reçu (R2.1) pour un outil sélectionné pour consulter une deuxième plage, inférieure ou égale à la première plage, de valeurs distinctes du premier paramètre, et une deuxième plage, inférieure ou égale à la première plage, de valeurs distinctes du deuxième paramètre afin d'obtenir un sous-ensemble de valeurs à partir des combinaisons de premières et deuxièmes valeurs de paramètres de fonctionnement distinctes ;
la dérivation (107, 109) d'une sélection optimale respective à partir de la pluralité d'options de lestage pour chaque combinaison du sous-ensemble de valeurs ;
l'identification (124) d'une sélection d'option de lestage sur la base d'un critère de sélection prédéterminé ; et
l'indication de la sélection identifiée à l'utilisateur.

2. Procédé selon la revendication 1, dans lequel le critère de sélection prédéterminé est la prévalence d'une option particulière de la pluralité d'options de lestage dans le sous-ensemble de valeurs.

3. Procédé selon la revendication 1, dans lequel le critère de sélection prédéterminé est la probabilité d'apparition d'une option particulière de la pluralité d'options de lestage dans le sous-ensemble de valeurs.

4. Procédé selon la revendication 1, dans lequel le critère de sélection prédéterminé est une sélection utilisateur en réponse à une représentation visuelle présentée (Fig. 5) du sous-ensemble de valeurs.

5. Procédé selon l'une quelconque des revendications 1 à 4, dans lequel le premier paramètre de fonctionnement du véhicule est une vitesse de travail.

6. Procédé selon une quelconque revendication précédente, dans lequel le deuxième paramètre de fonctionnement du véhicule est une charge verticale (F_Steutz) due à un outil sur un raccord entre ledit outil et le véhicule.

7. Procédé selon une quelconque revendication précédente, dans lequel l'identifiant reçu (R2.1) est obtenu à partir

**EP 3 197 762 B1**

d'une table de consultation en réponse à une sélection utilisateur depuis un menu (R2, 16) de types d'outil.

8. Procédé selon une quelconque revendication précédente, dans lequel chaque sélection optimale respective à partir de la pluralité d'options de lestage pour chaque combinaison du sous-ensemble de valeurs est déterminée par

- le calcul de répartition de charge de roue (ceta) et du poids total (mue) pour chaque option de lestage pour chaque combinaison du sous-ensemble de valeurs ;
- la détermination du courant différentiel de répartition de charge de roue (ceta) et du poids total (mue) par rapport à une valeur optimale prédéterminée pour chaque option de lestage pour chaque combinaison du sous-ensemble de valeurs ;
- le choix en tant que sélection optimale respective de la variante de lestage avec la somme la plus petite des deux courants différentiels.

9. Procédé selon une quelconque revendication précédente, comprenant en outre l'identification d'une première plage de valeurs distinctes d'un troisième paramètre de fonctionnement du véhicule pour étendre le sous-ensemble de valeurs à des combinaisons de premières, deuxièmes et troisièmes valeurs de paramètres de fonctionnement distinctes avant l'étape de dérivation d'une sélection optimale.

10. Procédé selon la revendication 9, dans lequel le troisième paramètre de fonctionnement du véhicule est un chargement moteur.

11. Procédé selon une quelconque revendication précédente, comprenant en outre le stockage d'une sélection d'option de lestage identifiée en référence à un identifiant (R2.8) pour l'outil agricole accouplé.

12. Système d'aide au lestage pour un véhicule agricole quand il est accouplé à un outil agricole, le système comprenant :

un dispositif d'affichage (14) ;
un dispositif de stockage de données (12) ; et
un dispositif de traitement de données (10) en communication avec le dispositif d'affichage et le dispositif de stockage de données, le dispositif de traitement de données étant configuré pour sélectionner l'une d'une pluralité d'options de lestage stockées pour le véhicule agricole quand il est accouplé à un outil agricole sélectionné, en réalisant les étapes de :

dans une première plage de valeurs distinctes d'un premier paramètre de fonctionnement du véhicule et une première plage de valeurs distinctes d'un deuxième paramètre de fonctionnement du véhicule, utilisation d'un identifiant reçu (R2.1) pour l'outil sélectionné pour consulter dans le dispositif de stockage de données (12) une deuxième plage, inférieure ou égale à la première plage, de valeurs distinctes du premier paramètre, et une deuxième plage, inférieure ou égale à la première plage, de valeurs distinctes du deuxième paramètre afin d'obtenir un sous-ensemble de valeurs à partir des combinaisons de premières et deuxièmes valeurs de paramètres de fonctionnement distinctes ;
dérivation (107, 109) d'une sélection optimale respective à partir de la pluralité d'options de lestage pour chaque combinaison du sous-ensemble de valeurs ;
identification (124) d'une sélection d'option de lestage sur la base d'un critère de sélection prédéterminé ; et
affichage de la sélection d'option de lestage identifiée sur le dispositif d'affichage.

13. Système d'aide au lestage selon la revendication 12, dans lequel le dispositif d'affichage (14) est un dispositif à écran tactile et l'identifiant reçu est obtenu à partir d'une table de consultation dans le dispositif de stockage de données (12) en réponse à une sélection utilisateur via l'écran tactile depuis un menu (R2, 16) de types d'outil affichés.

14. Système d'aide au lestage selon la revendication 12, comprenant en outre un moyen de communication sans fil, et l'identifiant reçu est obtenu à partir d'une table de consultation stockée à distance en réponse à une sélection utilisateur via le dispositif de traitement de données (10).

15. Dispositif de stockage de données (12) portant des données définissant une utilité logicielle, ladite utilité logicielle quand elle est chargée sur un dispositif de traitement de données (10) en communication avec un dispositif d'affichage fournissant un système d'aide au lestage pour un véhicule agricole accouplé à un outil agricole dans lequel système d'aide au lestage le dispositif de traitement de données est configuré pour sélectionner l'une d'une pluralité d'options de lestage stockées pour le véhicule agricole lorsqu'il est accouplé à l'outil agricole, en réalisant les étapes de :

dans une première plage de valeurs distinctes d'un premier paramètre de fonctionnement du véhicule et une première plage de valeurs distinctes d'un deuxième paramètre de fonctionnement du véhicule, utilisation d'un identifiant reçu (R2.1) pour l'outil sélectionné pour consulter dans le dispositif de stockage de données une deuxième plage, inférieure ou égale à la première plage, de valeurs distinctes du premier paramètre, et une deuxième plage, inférieure ou égale à la première plage, de valeurs distinctes du deuxième paramètre afin d'obtenir un sous-ensemble de valeurs à partir des combinaisons de premières et deuxièmes valeurs de paramètres de fonctionnement distinctes ;

dérivation (107, 109) d'une sélection optimale respective à partir de la pluralité d'options de lestage pour chaque combinaison du sous-ensemble de valeurs ;

identification (124) d'une sélection d'option de lestage sur la base d'un critère de sélection prédéterminé ; et

affichage de la sélection d'option de lestage identifiée sur le dispositif d'affichage.

Fig. 1

a) $F_{z,VA} = \frac{1}{x_1}(m_{FB} * g * x_4 + m_{SP} * g * x_2 - F_{Zug} * z_1 - F_{Stuetz} * x_1)$

b) $F_{z,HA} = m_{RB} * g + m_{SP} * g + m_{FB} * g - F_{z,VA}$

Fig. 2

GET weight variants — 100

GET user input — 102

GET v_min and v_max and F_Stuetz_min and F_Stuetz_max — 104

GET First value v (v_min... v_max) — 106

107

GET First value F_Stuetz (F_Stuetz_min... F_Stuetz_max) — 108

109

CALC F_U — 110

CALC F_ges,opt — 112

GET First variant

NEXT variant

CALC F_z, VA, i and F_z, HA, i(Front/Rear Load)

114

116

118 — CALC Diff_Ges, Diff_Vert

120 — CALC Sum(i)

LAST VARIANT — No

Yes

IDENTIFY optimal variant (v, F_Stuetz) — 122

No — F_Stuetz >F_Stuetz_max

Yes

No — V > v_max

Yes

IDENTIFY PREV — 124

Fig. 3

EP 3 197 762 B1

| Variant | Frontballast | Wheel ballast |
|---------|-------------|---------------|
| #1 | 0 kg | 0 kg |
| #2 | 2500 kg | 0 kg |
| #3 | 3300 kg | 0 kg |
| #4 | 2500 kg | 2500 kg |

Fig. 4

Fig. 5

Fig. 6

| Variant | Frontballast | Wheet ballast | Frequency |
|---------|--------------|---------------|-----------|
| #1 | 0 kg | 0 kg | 3 |
| #2 | 2500 kg | 0 kg | 12 |
| #3 | 3300 kg | 0 kg | 11 |
| #4 | 2500 kg | 2500 kg | 2 |

Fig. 7

Fig. 8

| Variant | Frontballast | Wheet ballast | Weighted Sum |
|---------|--------------|---------------|--------------|
| #1 | 0 kg | 0 kg | 25 |
| #2 | 2500 kg | 0 kg | 220 |
| #3 | 3300 kg | 0 kg | 150 |
| #4 | 2500 kg | 2500 kg | 15 |

Fig. 9

R.1 { Ball hitch | Lower links | Three point linkage — 14

Plough | Disc Harrow | Seed Drill

Cultivator | Compactor | Subsoiler } R.2

16' — Rotary Harrow | ?? |

R.3 { Light | Medium | Heavy

B.4 — Vehicle Speed Range | Engine Load — B.5

Fig. 10

| Variant | Frontballast | Wheel ballast | Weighted Sum at 12 kph | Weighted Sum at 13 kph | Weighted Sum at 14 kph | Weighted Sum at 15 kph |
|---|---|---|---|---|---|---|
| #1 | 0 kg | 0 kg | 0 | 0 | 10 | 15 |
| #2 | 2500 kg | 0 kg | 50 | 70 | 70 | 55 |
| #3 | 3300 kg | 0 kg | 30 | 45 | 45 | 15 |
| #4 | 2500 kg | 2500 kg | 5 | 10 | 0 | 0 |

Fig. 11

Working Speed [kph]

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013013915 A

- WO 2013104981 A